# EUROPEAN PATENT APPLICATION

(11) **EP 4 675 344 A1**
(43) Date of publication of application: **07.01.2026**
(21) Application number: 24186452.9
(22) Date of filing: 04.07.2024
(51) Int. Cl.: G02F 1/13, G02F 1/1335, G02F 1/01

(54) **LIGHT CONTROL UNIT FOR A DISPLAY DEVICE**

(71) Applicant: Elektrobit Automotive GmbH, 91058 Erlangen (DE)
(72) Inventor: Schlipf, Andreas, 91058 Erlangen (DE); Joos, Jürgen, 91058 Erlangen (DE); Franke, Thomas, 91058 Erlangen (DE)
(74) Representative: Aumovio Corporation

(57) **Abstract**

The present invention is related to a light control unit (10) for a display device. The light control unit (10) comprises a transparent base (100) with a light blocking structure (101). The light blocking structure (101) comprises a plurality of light blocking elements (102) that are reversibly switchable between a transparent state and a non-transparent state upon illumination with switching light (107). The invention is further directed towards a display device that comprises such a light control unit (10).

## Description

The present invention is related to a light control unit for a display device. The invention is further directed towards a display device that comprises such a light control unit.

In modern motor vehicles, an increasing amount of information is provided for the driver or other vehicle occupants, which goes far beyond the display of the vehicle's condition. Conventional combination instruments are therefore increasingly being replaced by freely programmable, digital displays. Such displays often make use of a display panel, e.g., a liquid crystal display panel in combination with a backlight unit, an OLED display (OLED: Organic Light Emitting Diode), etc.

With the increasing amount of information that may be displayed and the increasing number of display devices in motor vehicles, privacy is becoming an issue that needs to be considered. In particular, it may be desirable to provide a display device with a switchable privacy functionality. Switchable privacy even is a legal requirement for cars offering multimedia, such as videos, for co-drivers. To this end, dual-backlight systems, multi-cell systems, and systems using dedicated additional components have been developed. These systems limit the viewing angles of displays on demand to prevent driver distraction.

For example, a display device may make use of a first backlight unit that generates light with a wide viewing angle and a second backlight unit that generates light with a narrow viewing angle. If a user wants to display certain content with privacy, they may switch on a privacy function. The viewing angle is then limited to a narrow angle by switching from the first backlight unit to the second backlight unit.

In this regard, US 2012/0235891 A1 discloses a liquid crystal display device with a viewing angle control function. The liquid crystal display device has a first backlight unit and a second backlight unit. The first backlight unit transmits light incident from the second backlight unit and includes a first optical member, which converts light emitted from a light source into light having a narrow angle light distribution and which emits said light toward the back of a liquid crystal display panel. The second backlight unit includes a second optical member, which converts light emitted from a light source into light having a wide angle light distribution and which emits said light toward the back of the liquid crystal display panel.

However, it has been found that in practice the performance and the manufacturability of the above privacy functionality may still need to be improved.

It is an object of the present invention to provide an improved light control unit for a display device and an improved display device.

This object is achieved by a light control unit according to claim 1 and by a display device according to claim 9. The dependent claims include advantageous further developments and improvements of the present principles as described below.

According to a first aspect, a light control unit for a display device comprises a transparent base with a light blocking structure, wherein the light blocking structure comprises a plurality of light blocking elements that are reversibly switchable between a transparent state and a non-transparent state upon illumination with switching light.

According to the invention, switching between the viewing angles is not done electrically, but optically. The light control unit uses a transparent base with a light blocking structure comprising a plurality of switchable light blocking elements. The transparent base may be fabricated from plastic, glass, or any other suitable transparent materials. The light blocking elements reversibly turn non-transparent or black under exposure to light, where the term "light" refers to both visible light and radiation outside the visible spectrum.

Compared to dual-backlight systems, the solution according to the invention has a better power efficiency. It is expected that the power efficiency may be increased by more than 20%. Furthermore, manufacturing is less complex, as fewer components are needed. Therefore, less difficulties caused by manufacturing tolerances are expected. Furthermore, use of the described solution is not limited to dual-backlight systems. Also display technologies without backlight are supported. Compared to multi-cell systems, the present solution is less expensive and does not require a complex tuning. In addition, there are no visible color shifts. Compared to other systems using dedicated additional components, due to the switching by light exposure, there is no need for electrically conductive layers in front of the display.

This is particularly advantageous if the display is provided with an in-cell or on-cell touch functionality.

In an advantageous embodiment, the light blocking elements are trenches formed in the transparent base, which are filled with a switchable material that is reversibly switchable between a transparent state and a non-transparent state upon illumination with switching light. For example, the switchable material may be a photochromic material.

In an advantageous embodiment, the light blocking elements are stripes arranged on the transparent base, which at least partly consist of a material that is reversibly switchable between a transparent state and a non-transparent state upon illumination with switching light. Again, the switchable material may be a photochromic material. For example, the stripes may be printed onto one or more surfaces of the transparent base.

In an advantageous embodiment, the light control unit is configured to reduce a viewing angle by switching the switchable material from the transparent state to the non-transparent state. Depending on the state of the light exposure, the light control unit is in an on-state or an off-state as well. In the on-state, the switchable material inside the trenches is exposed to switching light and turns non-transparent or black. As a result, the switchable material inside the trenches blocks light that exits the light control unit at certain angles, which reduces the viewing angle. When the light exposure is stopped, the photochromatic material turns transparent again and stops blocking the light, which increases the viewing angle. The angles are defined by the design of the light control unit. The angles result from the height, width, and distance of the elements of the light blocking structure. For example, in a privacy mode, only light at angles between -15 ° and +15° may be allowed to pass through the light control unit. Light at other angles would be blocked.

In an advantageous embodiment, the light control unit further comprises at least one light source for illuminating the switchable material. At least one light source is needed for illuminating the switchable material. Advantageously, this at least one light source is part of the light control unit, though a separate light source may likewise be used. Preferably, multiple light sources are placed close to the transparent base to achieve a homogeneous illumination of the switchable material.

In an advantageous embodiment, the at least one light source is configured to emit visible light or light outside the visible spectrum, e.g., ultraviolet or infrared light. For display applications, it is advantageous if the switchable material reacts to wavelengths outside the visible wavelength range. This ensures that the switchable material is not optically switched by light emitted by a display panel of the display application.

In an advantageous embodiment, the light control unit further comprises a filter for blocking external switching light. In order to protect the switchable material from exposure to external switching light, e.g., the ultraviolet component of sunlight, one or more suitable filters may be applied to the light control unit. For example, a coating or material reflecting or absorbing the switching light may be applied to the transparent base. This prevents unintentional switching of the switchable material.

In an advantageous embodiment, the switchable material comprises embedded microcrystalline silver halides or organic photochromic molecules. The switchable material may be a material like the materials used for self-dimming glasses. For example, silver chloride may be embedded in the switchable material. Examples of suitable organic photochromic molecules are oxazines and naphthopyrans.

Advantageously, a light control unit according to the invention is used in a display device with a switchable privacy functionality, e.g., a display device for automotive applications. Advantageously, the display device is provided with a privacy function. Of course, use of the light control unit is not limited to this application. The light control unit can be used in any consumer product comprising a display device where a controllable viewing angle is desired, such as notebooks, smartphones, or tablets.

In an advantageous embodiment, the light control unit is arranged in front of a display panel of the display device in a viewing direction. Alternatively, the light control unit may be arranged behind a display panel of the display device in a viewing direction. The light control unit according to the invention can be placed in front of the display panel or behind the display panel. Placement behind the display panel is particularly suitable for non-emissive display panels, which need a backlight for illumination, such as LCDs (LCD: Liquid Crystal Display). Placement in front of the display panel is possible in non-emissive display panels as well as emissive display panels, such as OLED (OLED: Organic Light Emitting Diode) or µLED (µLED: Micro Light Emitting Diode) display panels.

In an advantageous embodiment, the display device further comprises a filter for blocking external switching light. Instead of or in addition to providing the light control unit with a filter, a filter may be included in the display device. For example, a suitable coating may be applied to a cover glass of the display device. Furthermore, special components with a cut-off characteristic may be arranged in the display device.

Advantageously, a motor vehicle comprises a display device according to the invention. For example, the motor vehicle may be a passenger car or a truck, or alternatively an aircraft, a rail vehicle, or a watercraft.

Further features of the present invention will become apparent from the following description and the appended claims in conjunction with the figures.

### Figures

- Fig. 1: schematically illustrates a first embodiment of a light control unit according to the invention in an on-state;
- Fig. 2: schematically illustrates the light control unit of Fig. 1 in an off-state;
- Fig. 3: schematically illustrates a second embodiment of a light control unit according to the invention;
- Fig. 4: schematically illustrates a third embodiment of a light control unit according to the invention;
- Fig. 5: schematically illustrates a first embodiment of a display device with a light control unit according to the invention;
- Fig. 6: schematically illustrates a second embodiment of a display device with a light control unit according to the invention; and
- Fig. 7: schematically illustrates a motor vehicle in using a display device according to the invention.

### Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

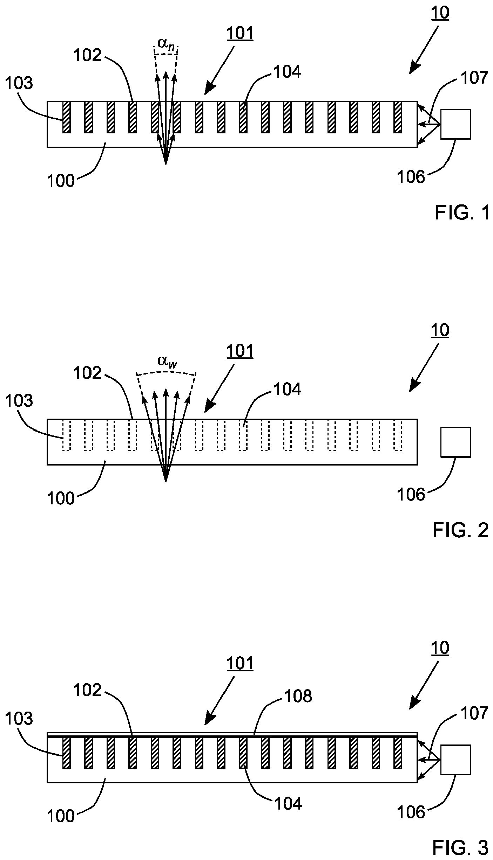

Fig. 1 schematically illustrates a first embodiment of a light control unit 10 according to the invention in an on-state. Fig. 2 schematically illustrates the light control unit 10 in an off-state. The light control unit 10 comprises a transparent base 100 and a plurality of trenches 103 formed in the transparent base 100. The trenches 103 serve as light blocking elements 102 of a light blocking structure 101. The transparent base 100 may be fabricated from plastic, glass, or other suitable transparent materials. The trenches 103 are filled with a switchable material 104 that is reversibly switchable between a transparent state and a non-transparent state upon illumination with switching light 107. For example, the switchable material may comprise embedded microcrystalline silver halides or organic photochromic molecules. In the on-state shown in Fig. 1, the switchable material 104 inside the trenches 103 is exposed to switching light 107 and turns non-transparent or black. As a result, the switchable material 104 inside the trenches 103 blocks light that exits the light control unit 10 at certain angles. This leads to a narrow viewing angle *aₙ*. When the light exposure is stopped, the photochromatic material 104 in the trenches 103 turns transparent again and stops blocking the light. This leads to a wide viewing angle *α_{w}*.

In the example of Fig. 1 and Fig. 2, the switching light 107 is provided by at least one light source 106 of the light control unit 10, which is located adjacent to the transparent base 100 and preferably is configured to emit visible light or light outside the visible spectrum, e.g., ultraviolet or infrared light. Advantageously, multiple light sources are 106 are arranged around the transparent base 100 to achieve a homogeneous illumination of the switchable material 104. Though in Fig. 1 and Fig. 2 the light source 106 is located close to the transparent base, the light source 106 can be located anywhere in the stack as long as the light reaches the light control unit 10. For example, the light source 106 may likewise be located in a backlight of a display device.

Fig. 3 schematically illustrates a second embodiment of a light control unit 10 according to the invention. The light control unit 10 is mostly identical to the one shown in Fig. 1 and Fig. 2. However, in this embodiment the light control unit 10 further comprises a filter 108 for blocking external switching light. In the example of Fig. 3, the filter 108 consists of a suitable coating that is applied to the transparent base 100. The filter 108 protects the switchable material 104 from exposure to external switching light, e.g., the ultraviolet component of sunlight. This prevents unintentional switching of the switchable material 104.

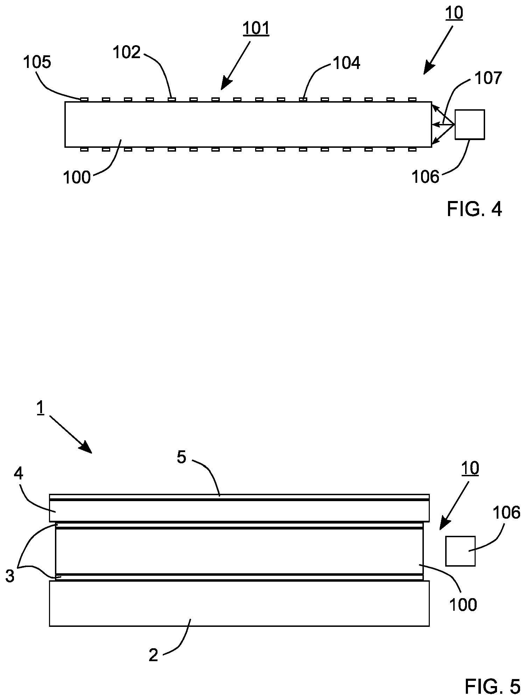

Fig. 4 schematically illustrates a third embodiment of a light control unit 10 according to the invention. The light control unit 10 is mostly identical to the one shown in Fig. 1 and Fig. 2. However, in this embodiment the light blocking elements 102 are stripes 105 arranged on the transparent base 100, which at least partly consist of a material 104 that is reversibly switchable between a transparent state and a non-transparent state upon illumination with switching light 107. For example, a print or coating with a photochromic material may be applied to one or multiple surfaces of the transparent base 100. Depending on the distribution of the stripes 105, the behavior of the viewing angle is defined.

Fig. 5 schematically illustrates a first embodiment of a display device 1 with a light control unit 10 according to the invention. In this embodiment, the light control unit 10 is arranged in front of a display panel 2 of the display device 1 in a viewing direction. For example, the display panel 2 may be a non-emissive display panel, such as an LCD panel, or an emissive display panel, such as an OLED display panel or a µLED display panel. The light control unit 10 is attached to the display panel 2 with an adhesive, such as an optically clear adhesive film. A cover glass 4 is located on top of the light control unit 10 and fixed to the light control unit 10 by a further adhesive 3. The cover glass 4 is provided with a filter 5 for blocking external switching light. In the example of Fig. 4, the filter 5 consists of a suitable coating that is applied to the cover glass 4. As an alternative or in addition, a special component with a cut-off characteristic may be arranged in the display device 1.

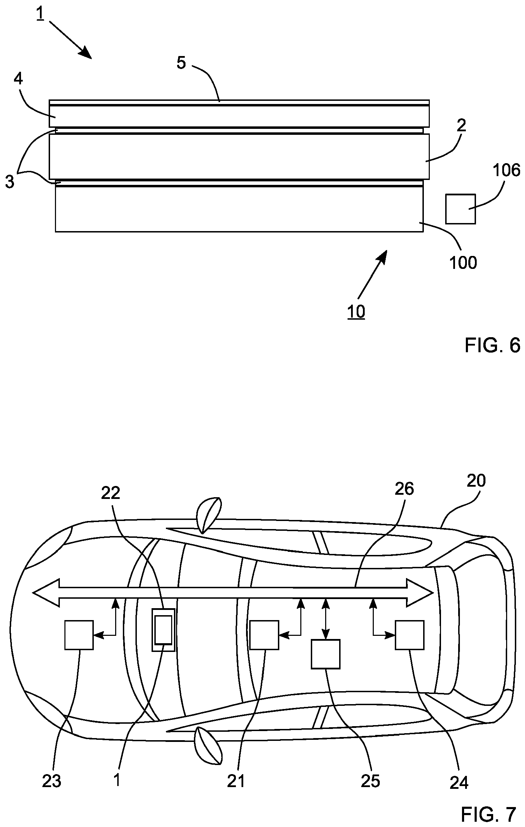

Fig. 6 schematically illustrates a second embodiment of a display device 1 with a light control unit 10 according to the invention. In this embodiment, the light control unit 10 is arranged behind a display panel 2 of the display device 1 in a viewing direction. Placement behind the display panel 2 is particularly suitable for non-emissive display panels, such as an LCD panel. The light control unit 10 is attached to the display panel 2 with an adhesive, such as an optically clear adhesive film. A cover glass 4 is located on top of the display panel 2 and fixed to the display panel 2 by a further adhesive 3. As in Fig. 4, the cover glass 4 is provided with a filter 5 for blocking external switching light.

Fig. 7 schematically shows a motor vehicle 20, which uses a display device 1 according to the invention. For example, the display device 1 may be arranged in a dashboard. The motor vehicle 20 in this example is a passenger car. With a sensor system 21, data on the vehicle environment can be recorded. The sensor system 21 may include sensors for detecting the surroundings, e.g., ultrasonic sensors, laser scanners, radar sensors, lidar sensors or cameras. The information recorded by the sensor system 21 can be used to generate content for the display device 1 to be displayed. The display device 1 may be part of an infotainment system 22. Further components of the motor vehicle 20 in this example are a navigation system 23, through which position information can be provided, and a data transmission unit 24. Through the data transmission unit 24, a connection to a backend can be established, e.g., to receive software updates for the components of the motor vehicle 20. A memory 25 is available for storing data. The data exchange between the different components of the motor vehicle 20 takes place via a network 26.

### Reference numerals

- 1: Display device
- 2: Display panel
- 3: Adhesive
- 4: Cover glass
- 5: Filter
- 10: Light control unit
- 100: Transparent base
- 101: Light blocking structure
- 102: Light blocking element
- 103: Trench
- 104: Switchable material
- 105: Stripe
- 106: Light source
- 107: Switching light
- 108: Filter

- 20: Motor vehicle
- 21: Sensor system
- 22: Infotainments system
- 23: Navigation system
- 24: Data transmission unit
- 25: Memory
- 26: Network

- *αₙ*: Narrow viewing angle
- *α_{w}*: Wide viewing angle

## Claims

1. A light control unit (10) for a display device (1), the light control unit (10) comprising a transparent base (100) with a light blocking structure (101), wherein the light blocking structure (101) comprises a plurality of light blocking elements (102) that are reversibly switchable between a transparent state and a non-transparent state upon illumination with switching light (107).

2. The light control unit (10) according to claim 1, wherein the light blocking elements (102) are trenches (103) formed in the transparent base (100), which are filled with a switchable material (104) that is reversibly switchable between a transparent state and a non-transparent state upon illumination with switching light (107).

3. The light control unit (10) according to claim 1, wherein the light blocking elements (102) are stripes (105) arranged on the transparent base (100), which at least partly consist of a material (104) that is reversibly switchable between a transparent state and a non-transparent state upon illumination with switching light (107).

4. The light control unit (10) according to claim 2 or 3, wherein the light control unit (10) is configured to reduce a viewing angle by switching the switchable material (104) from the transparent state to the non-transparent state.

5. The light control unit (10) according to one of claims 2 to 4, further comprising at least one light source (106) for illuminating the switchable material (104).

6. The light control unit (10) according to claim 5, wherein the at least one light source (106) is configured to emit visible light or light outside the visible spectrum.

7. The light control unit (10) according to one of claims 2 to 6, wherein the switchable material (104) comprises embedded microcrystalline silver halides or organic photochromic molecules.

8. The light control unit (10) according to one of the preceding claims, further comprising a filter (108) for blocking external switching light.

9. A display device (1) with a switchable privacy functionality, wherein the display device (1) comprises a light control unit (10) to one of the preceding claims.

10. The display device (1) according to claim 9, wherein the light control unit (10) is arranged in front of a display panel (2) of the display device (1) in a viewing direction.

11. The display device (1) according to claim 9, wherein the light control unit (10) is arranged behind a display panel (2) of the display device (1) in a viewing direction.

12. The display device (1) according to one of claims 9 to 11, further comprising a filter (5) for blocking external switching light.

13. A motor vehicle (20) comprising a display device (1) according to one of claims 9 to 12.

14. A consumer product comprising a display device (1) according to one of claims 9 to 12.
